# FASCICULE DE BREVET EUROPEEN

(11) **EP 4 422 895 B1**
(45) Date de publication et mention de la délivrance du brevet: **19.11.2025**
(21) Numéro de dépôt: 22801523.6
(22) Date de dépôt: 17.10.2022
(51) Int. Cl.: B60J 7/06

(54) **SYSTÈME DE COUVERTURE AMOVIBLE AUTO-ADAPTATIVE ET REMORQUE, SEMI-REMORQUE, BENNE, WAGON OU BÂTIMENT MUNI D'UN TEL SYSTÈME**
SELBSTANPASSENDES ABNEHMBARES ABDECKSYSTEM UND ANHÄNGER, SATTELAUFLIEGER, KIPPERAUFBAU, WAGGON ODER GEBÄUDE MIT SOLCH EINEM SYSTEM
SELF-ADAPTING REMOVABLE COVER SYSTEM AND TRAILER, SEMI-TRAILER, DUMP BODY, WAGON OR BUILDING PROVIDED WITH SUCH A SYSTEM

(30) Priorité: 25.10.2021 FR 2111321
(43) Date de publication de la demande: 04.09.2024
(73) Titulaire: Innovaction Technologies, 42110 Epercieux St Paul (FR)
(72) Inventeur: SAJNOVIC, Srecko, 42110 EPERCIEUX ST PAUL (FR)
(74) Mandataire: Casalonga
(86) Numéro de dépôt international: PCT/FR2022/051949
(87) Numéro de publication internationale: WO 2023/073300

(56) Documents cités:
- EP-A1- 0 885 759
- FR-A1- 2 974 549
- US-A1- 2008 284 199

## Description

### Domaine technique

L'invention a pour domaine technique les systèmes de couverture pour bennes et remorques, plus précisément les systèmes de couverture sectionnelle souple pour bennes et remorques.

### Techniques antérieures

Un système de couverture amovible permet de couvrir ou de découvrir l'ouverture d'une benne ou d'une remorque en entrainant des arceaux liés à une couverture amovible souple. Les arceaux sont généralement supportés par un rail et fixés à un câble d'entrainement qui permet de les déplacer dans un sens ou dans l'autre, entrainant la couverture amovible lors de leur déplacement.

De l'état de la technique, on connait le document FR1256895 divulguant une couverture amovible pour benne de camion, qui décrit un système d'enroulement/déroulement permettant de répondre aux problématiques de tension des câbles et de décalage de l'arceau de conduite de la couverture.

Un tel système de couverture amovible permet de prendre en compte de façon efficace les pertes de tension dans les câbles dues aux ouvertures et fermetures ainsi que les impacts sur les arceaux.

Néanmoins, un tel système de couverture amovible est basé sur l'hypothèse qu'une remorque ou une benne est un parallélépipède rigide. En réalité, une remorque ou une benne est soumise à des effets de déformation lors des chargements et déchargement pouvant mener à un déplacement de l'extrémité supérieure des parois latérales de plus de 15cm pour une remorque de 15m de long.

Une telle déformation des parois génère des contraintes mécaniques élevées dans le système de la couverture amovible notamment au niveau des arceaux et de la couverture souples. Si la contrainte dépasse la limite élastique des arceaux, une déformation plastique peut apparaitre ainsi qu'un blocage des curseurs dans le rail. D'autres systèmes de couvertures amovibles sont connues par exemple de EP 0 885 759 A1 et de US 2008/284199 A1.

Il existe un besoin pour un système de couverture amovible pouvant s'adapter à la déformation des parois latérales d'une remorque, d'une semi-remorque ou d'une benne.

Les bâtiments exposés à des variations de température jour/nuit sont exposés à des effets de dilatation importants. Suivant les matériaux employés, la déformation n'est pas uniforme et peut mener à des contraintes dans les systèmes de couverture.

Il existe ainsi un besoin pour un système de couverture amovible pouvant s'adapter à la déformation des parois d'un bâtiment.

### Exposé de l'invention

L'invention a pour objet un système de couverture amovible comprenant au moins un arceau muni à chacune de ses extrémités d'un curseur, chaque curseur circulant dans un rail d'écoute, une couverture souple étant fixée au au moins un arceau. Le système comprend un arceau au moins partiellement creux, comprenant à chacune de ses extrémités :
- une plaque reliée par une extrémité à un curseur et reliée par son autre extrémité à une plaque,
- une entretoise en contact avec la plaque et comprenant une lumière rectiligne à proximité d'une extrémité, une extrémité recourbée de la plaque étant insérée dans la lumière rectiligne de l'entretoise,
- la plaque et l'entretoise étant disposées à l'intérieur dans la partie creuse de l'arceau et solidarisées par un ensemble de fixation vis et boulon, et
- la plaque et l'entretoise étant munies d'une lumière longitudinale configurée pour coopérer avec l'ensemble de fixation vis et boulon, de sorte que l'arceau coulisse vis-à-vis de la plaque et de l'entretoise.

La plaque peut être munie à proximité de son autre extrémité d'une lumière rectiligne, la plaque comprenant une extrémité recourbée insérée dans la lumière rectiligne de la plaque, l'entretoise étant configurée pour sécuriser la position de la première extrémité recourbée de la plaque dans la lumière rectiligne de la plaque,

Le système de couverture amovible peut comprendre un dispositif tenseur à ressorts munie d'une bride et de deux ressorts, les deux ressorts comprenant chacun à l'une de leurs extrémités une boucle d'accroche et une fixation à la plaque à leur autre extrémités, chaque extrémité de la bride 8a comprenant un crochet coopérant avec une boucle d'accroche d'un des deux ressorts, la bride étant configurée pour être insérée dans des lumières ménagées dans la couverture souple et pour engager les crochets à ses extrémités dans les boucles d'accroche à l'extrémité des ressorts, de sorte que la couverture souple est solidarisée à l'arceau tout en disposant d'une liberté de déplacement selon la direction de traction des ressorts, sous l'action des ressorts.

Les extrémités de la bride peuvent présenter un profil en S de sorte que les crochets soient décalés par rapport au corps de la bride.

Le système de couverture amovible peut comprendre une protection disposée entre la couverture souple et la structure métallique formée par l'arceau et la plaque, configurée pour protéger la couverture souple des frottements.

L'invention a également pour objet une remorque munie d'un système de couverture amovible telle que décrite ci-dessus, dans laquelle les rails d'écoute sont disposés sur des parois latérales opposées.

L'invention a également pour objet une semi-remorque munie d'un système de couverture amovible telle que décrite ci-dessus, dans laquelle les rails d'écoute sont disposés sur des parois latérales opposées.

L'invention a également pour objet une benne munie d'un système de couverture amovible telle que décrite ci-dessus, dans laquelle les rails d'écoute sont disposés sur des parois latérales opposées.

L'invention a également pour objet un wagon munie d'un système de couverture amovible telle que décrite ci-dessus, dans laquelle les rails d'écoute sont disposés sur des parois latérales opposées.

L'invention a également pour objet un bâtiment muni d'un système de couverture amovible telle que décrite ci-dessus, dans laquelle les rails d'écoute sont disposés sur des parois latérales opposées.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 illustre les principaux éléments d'une vue plongeante sur le système de couverture amovible installé sur une remorque,
- la figure 2 illustre les principaux éléments d'une vue partielle du système de couverture amovible restreinte à un arceau,
- la figure 3 illustre les principaux éléments d'une vue en coupe du système de couverture amovible au niveau d'un arceau, et
- la figure 4 illustre les principaux éléments d'une vue plongeante du système de couverture amovible au niveau d'un arceau.

### Description détaillée

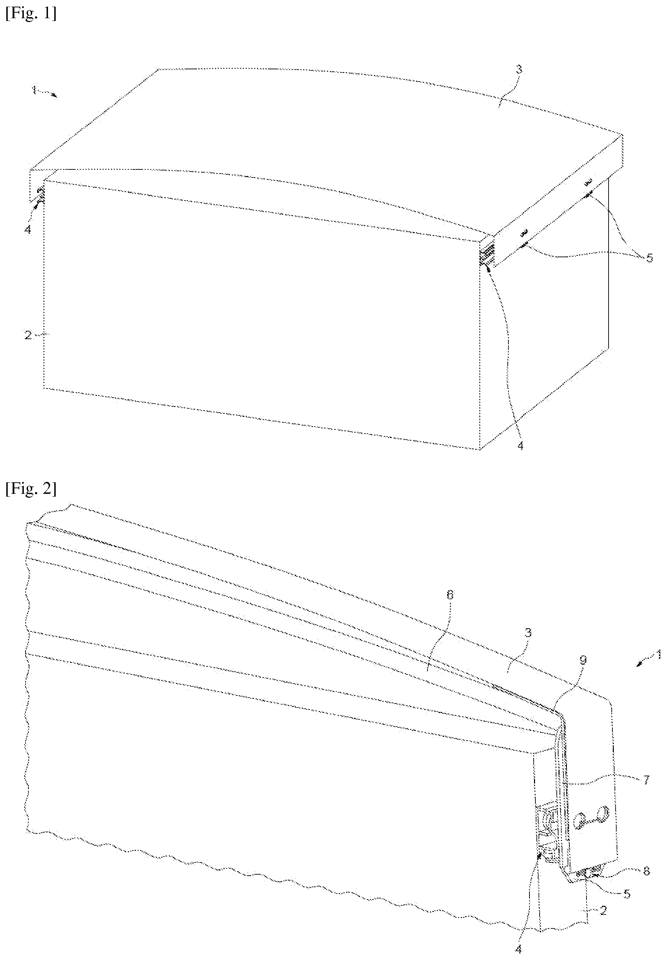

Sur la figure 1, le système de couverture amovible 1 selon l'invention est disposé sur une remorque 2. On notera pour la suite de la description, que le système de couverture amovible 1 peut également être installé sur une semi-remorque, une benne, sur wagon, ou sur un bâtiment.

Le système de couverture amovible 1 comprend une couverture souple 3 disposée sur des arceaux fixés chacun à chacune de leurs extrémités à un curseur 5. Les curseurs 5 coulissent ensuite dans deux rails d'écoute 4 disposés chacun sur une des parois latérales de chaque côté de la remorque 2. Sur la figure 1, les arceaux sont masqués par la couverture souple 3 et ne sont donc pas illustrés sur la figure 1. Les curseurs 5 et rails d'écoute 4déssinés sur la figure 1 le sont à titre purement illustratif. D'autres curseurs 5 et rails peuvent être employés tout en restant dans le périmètre de l'invention.

La figure 2 illustre une vue partielle du système de couverture amovible 1 restreinte à une extrémité d'un arceau 6.

L'arceau 6 est ainsi fixé par une de ses extrémités à un curseur 5 par l'intermédiaire d'une plaque 7. Le curseur 5 est disposé dans un rail d'écoute 4 de sorte à pouvoir se déplacer longitudinalement sans sortir du rail d'écoute 4. Le rail d'écoute 4 est fixé sur une paroi latérale de la remorque 2.

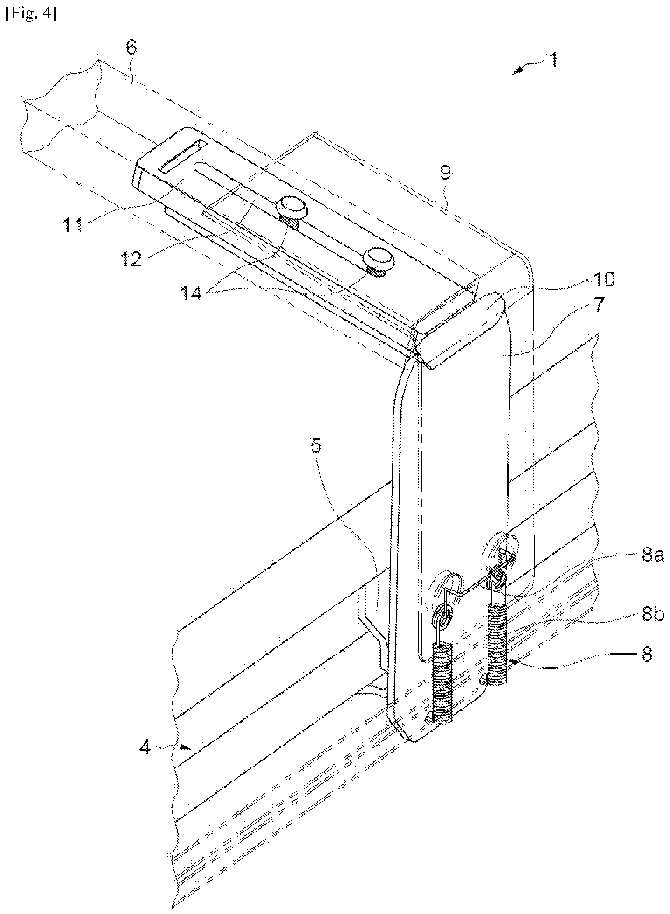

La couverture souple 3 est disposée sur l'arceau 6 et la plaque 7 et est maintenue en place par un dispositif tenseur à ressorts 8, qui sera décrit plus loin en relation avec la figure 4. De par l'utilisation du dispositif tenseur à ressorts 8, la couverture souple 3 dispose d'une liberté de position verticale sur la plaque 7 par rapport aux fixations classiques par lassage, visserie ou rivets.

Une protection 9 peut être disposée entre la couverture souple 3 et la structure métallique formée par l'arceau 6 et la plaque 7 pour protéger la couverture souple 3 des frottements.

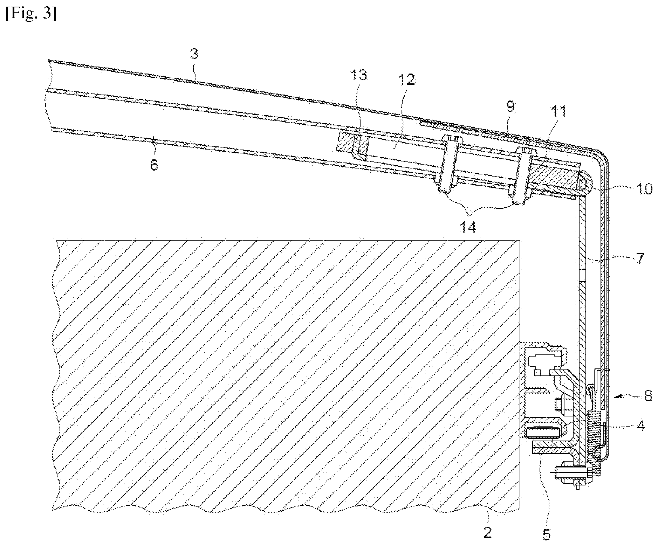

La figure 3 illustre une vue en coupe du système de couverture amovible 1 au niveau d'un arceau 6.

On retrouve la couverture souple 3 disposée sur l'arceau 6 et la plaque 7, la couverture souple 3 étant fixée par le dispositif tenseur à ressorts 8 à la base de la plaque 7. La plaque 7 est fixée de façon solidaire au curseur 5 disposé dans le rail d'écoute 4.

La structure de l'arceau 6 est illustrée sur cette même figure 3. L'arceau 6 présente une forme parallélépipédique cintrée à section creuse. L'arceau 6 est relié à la plaque 7 par l'intermédiaire d'une plaque 10 aux extrémités recourbées, associée à une entretoise 11. Une première extrémité recourbée de la plaque 10 est disposée dans une lumière correspondante de la plaque 7. L'entretoise 11 est disposée au contact de la plaque 10 de sorte à être au contact de la première extrémité recourbée. La deuxième extrémité recourbée de la plaque 10 est alors introduite dans une lumière 13 de l'entretoise 11.

L'arceau 6 est alors disposé de sorte à contenir la plaque 10 et l'entretoise 11. Deux ensembles vis et boulons 14 sont fixés solidairement à l'arceau 6 et sont disposés de sorte à traverser une lumière oblongue 12 ménagée dans la plaque 10 et l'entretoise 11.

Ainsi fixé, l'arceau 6 peut coulisser sur l'ensemble formé par la plaque 10 et l'entretoise 11 sur une longueur définie par l'écartement entre les ensembles vis et boulons 14 et la longueur de la lumière oblongue 12.

La fixation de la plaque 10 sur la plaque 7 permet de conserver un degré de liberté en rotation et l'entretoise 11 permet d'éviter la séparation de la plaque 10 et de la plaque 7 du fait de vibration ou d'un choc.

La fixation de la plaque 10 sur la plaque 7 et la coulisse de l'arceau 6 sur l'ensemble formé par la plaque 10 et l'entretoise 11 permettent de compenser une variation de distance entre les extrémités supérieures des parois latérales de la remorque 2. Une telle variation de distance est observée communément lors des trépidations de la remorque 2 en mouvement ou lors de la charge de la remorque 2. On rappelle qu'il est commun d'observer qu'une telle variation soit supérieure à 15cm.

La figure 4 illustre une vue plongeante sur l'extrémité de l'arceau 6. Par rapport à la figure 3, la figure 4 illustre en plus le dispositif tenseur à ressorts 8.

Le dispositif tenseur à ressorts 8 comprend une bride 8a coopérant avec deux ressorts 8b parallèles solidaires de la plaque 7. Plus précisément les deux ressorts 8b comprennent une première extrémité munie d'une boucle d'accroche et une deuxième extrémité fixée à la plaque 7. Chaque extrémité de la bride 8a comprend un crochet coopérant avec une boucle d'accroche d'un des deux ressorts 8b. Il est ainsi possible d'insérer la bride 8a dans des lumières ménagées dans la couverture souple 3 et d'en engager les crochets dans les boucles d'accroche à l'extrémité des ressorts 8b. La couverture souple 3 est alors solidarisée à l'arceau 6 tout en disposant d'une liberté de déplacement selon la direction de traction des ressorts 8b, tout en demeurant tendue grâce à l'action des ressorts 8b.

Les extrémités de la bride 8a peuvent présenter un profil en S de sorte que les crochets soient décalés par rapport au corps de la bride. L'insertion des crochets est alors facilitée de par la possibilité d'imprimer un mouvement de traction sur le corps de la bride tout en maintenant les crochets en face des boucles d'accroche.

Le système de couverture amovible 1 permet de s'adapter à une variation de distance entre les rails d'écoute 4 de sorte à éviter les blocages. L'adaptation se fait au niveau de la coulisse de l'arceau 6, permettant d'en modifier la longueur, au niveau de la rotation entre la plaque 10 et la plaque 7, permettant de modifier l'angle entre elles, et au niveau du dispositif tenseur à ressorts 8, permettant de modifier la position de l'extrémité de la couverture amovible 3 par rapport à l'arceau 6.

On comprendra que les modifications de positions ou d'angles décrites ci-dessus se font de manière passive, lors du fonctionnement du système de couverture amovible, sans intervention d'un opérateur.

## Revendications

1. Système de couverture amovible comprenant au moins un arceau (6) muni à chacune de ses extrémités d'un curseur (5), chaque curseur (5) circulant dans un rail d'écoute (4), une couverture souple (3) étant fixée au au moins un arceau (6), le système comprenant un arceau (6) au moins partiellement creux, comprenant à chacune de ses extrémités :
• une première plaque (7) reliée par une extrémité à un curseur (5) et reliée par son autre extrémité à une deuxième plaque (10),
• une entretoise (11) en contact avec la deuxième plaque (10) et comprenant une lumière rectiligne à proximité d'une extrémité, une extrémité recourbée de la deuxième plaque (10) étant insérée dans la lumière rectiligne de l'entretoise (11),
• la deuxième plaque (10) et l'entretoise (11) étant disposées à l'intérieur dans la partie creuse de l'arceau (6) et solidarisées par un ensemble de fixation vis et boulon, le système étant **caractérisé par le fait que**
• la deuxième plaque (10) et l'entretoise (11) étant munies d'une lumière longitudinale configurée pour coopérer avec l'ensemble de fixation vis et boulon, de sorte que l'arceau (6) coulisse vis-à-vis de la deuxième plaque (10) et de l'entretoise (11).

2. Système de couverture amovible selon la revendication 1, dans laquelle la première plaque (7) est munie à proximité de son autre extrémité d'une lumière rectiligne, la deuxième plaque (10) comprenant une extrémité recourbée insérée dans la lumière rectiligne de la première plaque (7), l'entretoise (11) étant configurée pour sécuriser la position de la première extrémité recourbée de la deuxième plaque (10) dans la lumière rectiligne de la première plaque (7),

3. Système de couverture amovible selon l'une quelconque des revendications 1 ou 2, comprenant un dispositif tenseur à ressorts (8) munie d'une bride (8a) et de deux ressorts (8b), les deux ressorts (8b) comprenant chacun à l'une de leurs extrémités une boucle d'accroche et une fixation à la première plaque (7) à leur autre extrémités, chaque extrémité de la bride (8a) comprenant un crochet coopérant avec une boucle d'accroche d'un des deux ressorts (8b), la bride (8a) étant configurée pour être insérée dans des lumières ménagées dans la couverture souple (3) et pour engager les crochets à ses extrémités dans les boucles d'accroche à l'extrémité des ressorts (8b), de sorte que la couverture souple (3) est solidarisée à l'arceau (6) tout en disposant d'une liberté de déplacement selon la direction de traction des ressorts (8b), sous l'action des ressorts (8b).

4. Système de couverture amovible selon la revendication 3, dans lequel les extrémités de la bride (8a) présentent un profil en S de sorte que les crochets soient décalés par rapport au corps de la bride.

5. Système de couverture amovible selon l'une quelconque des revendications 1 à 4, comprenant une protection (9) disposée entre la couverture souple (3) et la structure métallique formée par l'arceau (6) et la première plaque (7), configurée pour protéger la couverture souple (3) des frottements.

6. Remorque munie d'un système de couverture amovible selon l'une quelconque des revendications 1 à 5, dans laquelle les rails d'écoute (4) sont disposés sur des parois latérales opposées.

7. Semi-remorque munie d'un système de couverture amovible selon l'une quelconque des revendications 1 à 5, dans laquelle les rails d'écoute (4) sont disposés sur des parois latérales opposées.

8. Benne munie d'un système de couverture amovible selon l'une quelconque des revendications 1 à 5, dans laquelle les rails d'écoute (4) sont disposés sur des parois latérales opposées.

9. Wagon muni d'un système de couverture amovible selon l'une quelconque des revendications 1 à 5, dans laquelle les rails d'écoute (4) sont disposés sur des parois latérales opposées.

10. Bâtiment muni d'un système de couverture amovible selon l'une quelconque des revendications 1 à 5, dans laquelle les rails d'écoute (4) sont disposés sur des parois latérales opposées.

## Patentansprüche

1. Abnehmbares Abdecksystem, das mindestens einen Bügel (6) umfasst, der an jedem seiner Enden mit einem Schieber (5) versehen ist, wobei jeder Schieber (5) in einer Hörschiene (4) verläuft, wobei eine weiche Abdeckung (3) mindestens an einem Bügel (6) befestigt ist, wobei das System einen mindestens teilweise hohlen Bügel (6) umfasst, der an jedem seiner Enden Folgendes umfasst:
• eine erste Platte (7), die von einem Ende mit einem Schieber (5) verbunden und von ihrem anderen Ende mit einer zweiten Platte (10) verbunden ist,
• einen Abstandhalter (11), der die zweite Platte (10) berührt und ein gerades Lumen in der Nähe eines Endes umfasst, wobei ein gebogenes Ende der zweiten Platte (10) in das gerade Lumen des Abstandhalters (11) eingeführt ist,
• wobei die zweite Platte (10) und der Abstandshalter (11) innen in dem hohen Teil des Bügels (6) angeordnet und durch eine Befestigungsbaugruppe aus Schraube und Bolzen befestigt sind, wobei das System **dadurch gekennzeichnet ist, dass**
• wobei die zweite Platte (10) und der Abstandshalter (11) mit einem Längslumen versehen sind, das so eingerichtet ist, dass es mit der Befestigungsbaugruppe aus Schraube und Bolzen zusammenarbeitet, sodass der Bügel (6) gegenüber der zweiten Platte (10) und dem Abstandshalter (11) gleitet.

2. Abnehmbares Abdecksystem nach Anspruch 1, wobei die erste Platte (7) in der Nähe ihres anderen Endes mit einem geraden Lumen versehen ist, wobei die zweite Platte (10) ein in das gerade Lumen der ersten Platte (7) eingeführtes gebogenes Ende umfasst, wobei der Abstandshalter (11) so eingerichtet ist, dass er die Position des ersten gebogenen Endes der zweiten Platte (10) in dem geraden Lumen der ersten Platte (7) sichert,

3. Abnehmbares Abdecksystem nach einem der Ansprüche 1 oder 2, umfassend eine Federspannvorrichtung (8), die mit einer Schlaufe (8a) und zwei Federn (8b) versehen ist, wobei die beiden Federn (8b) jeweils an einem ihrer Enden eine Einhängeschlaufe und eine Befestigung an der ersten Platte (7) an ihren anderen Enden umfassen, wobei jedes Ende des Flansches (8a) einen Haken umfasst, der mit einer Einhängeschlaufe einer der beiden Federn (8b) zusammenarbeitet, wobei die Schlaufe (8a) so eingerichtet ist, dass sie in Lumen eingeführt wird, die in der weichen Abdeckung (3) vorgesehen sind, und die Haken an ihren Enden in die Einhängeschlaufen an dem Ende der Federn (8b) in Eingriff nimmt, so dass die weiche Abdeckung (3) mit dem Bügel (6) befestigt ist und gleichzeitig unter Einwirkung der Federn (8b) eine Bewegungsfreiheit gemäß der Zugrichtung der Federn (8b) aufweist.

4. Abnehmbares Abdecksystem nach Anspruch 3, wobei die Enden der Schlaufe (8a) ein S-Profil besitzen, sodass die Haken gegenüber dem Schlaufenkörper versetzt sind.

5. Abnehmbares Abdeckungssystem nach einem der Ansprüche 1 bis 4, umfassend einen Schutz (9), der zwischen der weichen Abdeckung (3) und der Metallstruktur angeordnet ist, die durch den Bügel (6) und die erste Platte (7) gebildet wird, die so eingerichtet ist, dass sie die weiche Abdeckung (3) vor Reibung schützt.

6. Anhänger mit einem abnehmbaren Abdeckungssystem nach einem der Ansprüche 1 bis 5, wobei die Hörschienen (4) an gegenüberliegenden Seitenwänden angeordnet sind.

7. Sattelauflieger mit einem abnehmbaren Abdecksystem nach einem der Ansprüche 1 bis 5, wobei die Hörschienen (4) an gegenüberliegenden Seitenwänden angeordnet sind.

8. Kipper mit einem abnehmbaren Abdecksystem nach einem der Ansprüche 1 bis 5, wobei die Hörschienen (4) an gegenüberliegenden Seitenwänden angeordnet sind.

9. Wagen mit einem abnehmbaren Abdecksystem nach einem der Ansprüche 1 bis 5, wobei die Hörschienen (4) an gegenüberliegenden Seitenwänden angeordnet sind.

10. Gebäude mit einem abnehmbaren Abdecksystem nach einem der Ansprüche 1 bis 5, wobei die Hörschienen (4) an gegenüberliegenden Seitenwänden angeordnet sind.

## Claims

1. Removable cover system comprising at least one arch (6) provided at each of its ends with a slider (5), each slider (5) travelling within a traveller track (4), a flexible cover (3) being fixed to at least one arch (6), the system comprising an at least partially hollow arch (6), comprising at each of its ends:
• a first plate (7) connected at one end to a slider (5) and connected at the other end to a second plate (10),
• a spacer (11) in contact with the second plate (10) and comprising a rectilinear slot close to one end, a curved end of the second plate (10) being inserted into the rectilinear slot in the spacer (11),
• the second plate (10) and the spacer (11) being disposed inside the hollow part of the arch (6) and being secured by a screw and bolt fastening assembly, the system being **characterised by** the fact that
• the second plate (10) and the spacer (11) being provided with a longitudinal slot configured to cooperate with the screw and bolt fastening assembly, such that the arch (6) slides with respect to the second plate (10) and the spacer (11).

2. Removable cover system according to claim 1, wherein the first plate (7) is provided with a rectilinear slot close to its other end, the second plate (10) having a curved end inserted into the rectilinear slot of the first plate (7), the spacer (11) being configured to secure the position of the first curved end of the second plate (10) inside the rectilinear slot of the first plate (7),

3. Removable cover system according to any one of claims 1 or 2, comprising a spring tensioning device (8) provided with a flange (8a) and two springs (8b), each of the two springs (8b) comprising a hooking loop at one end and an attachment to the first plate (7) at the other end, each end of the flange (8a) comprising a hook that cooperates with a hooking loop of one of the two springs (8b), the flange (8a) being configured to be inserted into the slots provided in the flexible cover (3) and to engage the hooks at its ends with the hooking loops at the end of the springs (8b), such that the flexible cover (3) is secured to the arch (6) while having freedom of movement in the direction of pull of the springs (8b), under the action of the springs (8b).

4. Removable cover system according to claim 3, wherein the ends of the flange (8a) have an S-shaped profile, such that the hooks are offset from the body of the flange.

5. Removable cover system according to any one of claims 1 to 4, comprising a protective member (9) positioned between the flexible cover (3) and the metal structure formed by the arch (6) and the first plate (7), configured to protect the flexible cover (3) from friction.

6. Trailer equipped with a removable cover system according to any one of claims 1 to 5, wherein the traveller tracks (4) are positioned on opposite side walls.

7. Semi-trailer equipped with a removable cover system according to any one of claims 1 to 5, wherein the traveller tracks (4) are positioned on opposite side walls.

8. Container equipped with a removable cover system according to any one of claims 1 to 5, wherein the traveller tracks (4) are positioned on opposite side walls.

9. Wagon equipped with a removable cover system according to any one of claims 1 to 5, wherein the traveller tracks (4) are positioned on opposite side walls.

10. Building equipped with a removable cover system according to any one of claims 1 to 5, wherein the traveller tracks (4) are positioned on opposite side walls.
